# EUROPEAN PATENT APPLICATION

(11) **EP 4 691 250 A1**
(43) Date of publication of application: **11.02.2026**
(21) Application number: 24780421.4
(22) Date of filing: 27.03.2024
(51) Int. Cl.: A23G 1/40, A21D 13/00, A23G 1/54, A23G 3/34

(54) **CHOCOLATE FOR SIMULTANEOUS BAKING WITH WATER-CONTAINING BREAD DOUGH OR BAKED CONFECTIONERY DOUGH**

(30) Priority: 31.03.2023 JP 2023058252
(71) Applicant: Fuji Oil Company, Limited, Izumisano-shi Osaka 598-8540 (JP)
(72) Inventor: SATO, Yasuko, Izumisano-shi, Osaka 598-8540 (JP)
(74) Representative: Becker, Eberhard
(86) International application number: PCT/JP2024/012195
(87) International publication number: WO 2024/204315

(57) **Abstract**

The present invention addresses the problem of providing a chocolate for simultaneous baking with water-containing bread dough or baked confectionery dough, in which the chocolate has a good flavor and a hard, crunchy texture regardless of being baked in contact with water-containing dough such as baked confectionary dough or bread dough. This chocolate for simultaneous baking with water-containing bread dough or baked confectionery dough contains a stipulated amount of sucrose and/or glucose, and contains, at a specific ratio, at least one substance selected from the group consisting of isomaltose, trehalose, and maltitol.

## Description

### Technical Field

### Related Application

This application claims the benefit of priority from Japanese Patent Application No. 2023-058252 filed on March 31, 2023. The priority application is incorporated herein by reference in its entirety.

The present invention relates to a chocolate for simultaneous baking with a water-containing bread dough or baked confectionery dough.

### Background Art

Chocolate is a food that is preferred by everyone, for example, it is used for many confectioneries. As composite confectioneries in which various kinds of chocolate are combined with a bakery dough such as a cookie, there are many products in which chocolate is combined with breads or confectioneries and baked.

With regard to a baked chocolate used for breads and confectioneries, Patent Document 1 discloses a heating chocolate suitable for soft chocolate in which oil and/or fat are hardly separated and heat resistance is exhibited. Patent Document 2 discloses a chocolate for baked food products, which has a total oil content of from 20.0 to 32.2 mass%, and a ratio of a solid content derived from a cacao solid raw material to the total oil content of 0.56 or more, and is excellent in suppressing exudation of oil and/or fat. However, Patent Documents 1 and 2 do not describe texture of the chocolate after baking.

Patent Document 3 describes an oil and/or fat-based baked confectionery produced by baking a chocolate dough itself containing a carbohydrate selected from isomaltulose, mannitol, and reduced palatinose. However, there is no description of chocolates co-fired with a water-containing bread dough or baked confectionery dough.

### Citation List

### Patent Document

Patent Document 1: JP 2021-045101 A
Patent Document 2: JP 2012-070710 A
Patent Document 3: WO 2012/121327

### Summary of Invention

### Technical Problem

The present inventor has considered the texture of a chocolate after baking in the chocolate for simultaneous baking with a bread dough or a baked confectionery dough. It has been found that when the chocolate is baked together with the bread dough or the baked confectionery dough, unfortunately, the texture becomes soft due to an influence of water content contained in the bread dough or the baked confectionery dough.

To improve the texture of the chocolate after baking, it is conceivable to blend a functional component; however, there are concerns about an influence of a flavor derived from the functional component and an influence on a chocolate flavor since the blending of the functional component reduces a raw material originally blended in the chocolate. Therefore, it is important to maintain a good flavor of the chocolate also in improving the texture of the chocolate after baking.

Thus, an object of the present invention is to provide a chocolate for simultaneous baking with a water-containing bread dough or baked confectionery dough, the chocolate having a good chocolate flavor and crunchy and hard texture despite being baked in contact with the water-containing dough such as a baked confectionery dough or a bread dough.

### Solution to Problem

As a result of intensive studies to solve the above issues, the present inventor has found that a chocolate for simultaneous baking with a water-containing bread dough or baked confectionery dough can solve the above issues, the chocolate containing a specified amount of sucrose and/or glucose and containing one or more selected from the group consisting of isomaltulose, trehalose, and maltitol at a specific ratio, and the present inventor has completed the present invention.

That is, the present invention includes the following contents.
(1) A chocolate for simultaneous baking with a water-containing bread dough or baked confectionery dough, the chocolate satisfying all of the following (A) to (C):
   (A) a content of sucrose and/or glucose is 6 mass% or more and 20 mass% or less;
   (B) one or more selected from the group consisting of isomaltulose, trehalose, and maltitol are contained; and
   (C) a content mass ratio of sucrose to a content of the (B) is 1 or less.
(2) The chocolate for simultaneous baking with a water-containing bread dough or baked confectionery dough according to (1), the chocolate further containing 5 mass% or more and 30 mass% or less of a milk powder.
(3) The chocolate for simultaneous baking with a water-containing bread dough or baked confectionery dough according to (1) or (2), the chocolate further containing 1 mass% or more and 10 mass% or less of starch.
(4) The chocolate for simultaneous baking with a water-containing bread dough or baked confectionery dough according to (1) or (2), wherein the (B) is isomaltulose.
(5) The chocolate for simultaneous baking with a water-containing bread dough or baked confectionery dough according to (3), wherein the (B) is isomaltulose.
(6) A method for improving a texture of a chocolate after simultaneous baking, the method including using a chocolate satisfying all of the following (A) to (C) for simultaneous baking with a water-containing bread dough or baked confectionery dough:
   (A) a content of sucrose and/or glucose is 6 mass% or more and 20 mass% or less;
   (B) one or more selected from the group consisting of isomaltulose, trehalose, and maltitol are contained; and
   (C) a content mass ratio of sucrose to a content of the (B) is 1 or less.
(7) The method for improving a texture of a chocolate after simultaneous baking according to (6), wherein the chocolate further contains 5 mass% or more and 30 mass% or less of a milk powder.
(8) The chocolate for simultaneous baking with a water-containing bread dough or baked confectionery dough according to (3), wherein a change in texture of the chocolate after simultaneous baking with the water-containing bread dough or baked confectionery dough is suppressed.

### Advantageous Effects of Invention

According to the present invention, it is possible to provide a chocolate having a good chocolate flavor and crunchy and hard texture despite being baked in contact with the water-containing dough such as a baked confectionery dough or a bread dough.

As a preferred aspect, it is possible to provide a chocolate having a good chocolate flavor despite being baked in contact with the water-containing dough such as a baked confectionery dough or a bread dough, and having a crunchy and hard texture even after a lapse of time from the baking.

### Description of Embodiments

In the present invention, the water-containing bread dough or baked confectionery dough is a dough of a food product baked by heating a dough containing a cereal flour as a raw material in an oven or the like. Examples of the bread dough include a danish dough, a croissant dough, a steamed bread dough, a doughnut dough, a scone dough, and a pie dough. Examples of the baked confectionery dough include a cookie dough, a biscuit dough, a cracker dough, a tart dough, a sable dough, a muffin dough, a pound cake dough, and a financier dough.

As a preferred aspect, a water content in the dough before baking is from 30 mass% to 70 mass%, and more preferably from 35 mass% to 65 mass%. The water content in the dough before baking is, for example, about 45 mass% in the bread dough, about 60 mass% in the confectionery bread dough, about 60 mass% in the doughnut dough, and about 50 mass% in the croissant dough.

The chocolate for simultaneous baking of the present invention is used for simultaneous baking with the water-containing bread dough.

By using the chocolate for simultaneous baking of the present invention, it is possible to provide a chocolate having a good chocolate flavor and crunchy and hard texture despite being baked in contact with the water-containing dough.

According to Standard Tables of Food Composition in Japan, 2015, (Seventh Revised Version, Ministry of Education, Culture, Sports, Science and Technology), the water content of a baked croissant is 20 mass%, and the water content of a cookie is 3 mass%.

The chocolate for simultaneous baking with the water-containing bread dough or baked confectionery dough of the present invention is a chocolate which can be appropriately combined with the bread dough or the baked confectionery dough by means exemplified by mixing, encapsulating, encrusting, and placing, and can be subjected to oven firing while the chocolate and the bread dough or the baked confectionery dough are in contact with each other.

The chocolate in the present invention is not restricted by regulations ("The Fair Competition Code Concerning Labeling for Chocolates") or not subjected to legal restrictions, and includes various chocolates and oil and/or fat processed foods using animal and vegetable oils and/or fats other than cocoa butter, and chocolate products. Raw materials such as cocoa mass, cocoa butter, cocoa powder, edible oils and/or fats, saccharides, milk powder, emulsifiers, and aroma agents are appropriately blended to prepare a chocolate by a known method. The chocolate may be either tempered or non-tempered chocolate, and the effect of the present invention can be achieved.

In the chocolate for simultaneous baking of the present invention, the water content in the chocolate before baking is preferably less than 3 mass%.

The chocolate for simultaneous baking of the present invention is molded into a specific or indefinite shape. Specific examples of the shape include a plate, a tablet, a cube, a chunk (cube to rectangular parallelepiped), a cylinder, a chip, a pellet, a granular shape, a spherical shape, a go stone shape, a thin piece shape, a cut powder, a flake, and a curled shape.

As the oil and/or fat used in the present invention, any oil and/or fat generally used for chocolates can be used as long as the effect of the present invention is not impaired. Examples thereof include vegetable oils and/or fats, such as soybean oil, high-erucic rapeseed oil, rapeseed oil, corn oil, cottonseed oil, peanut oil, sunflower oil, high-oleic sunflower oil, rice oil, safflower oil, high-oleic safflower oil, olive oil, sesame oil, palm oil, coconut oil, palm kernel oil, a medium-chain fatty acid-conjugated oil and/or fat (MCT), shea butter, sal fat, and cocoa fat; animal oils and/or fats, such as milk fat, beef tallow, and lard; and their hydrogenated oils, fractionated oils, hydrogenated fractionated oils, fractionated hydrogenated oils, and processed oils and/or fats produced by subjecting to interesterification; as well as mixed oils of these.

In the case of using high-erucic rapeseed oil, the content of erucic acid contained in the high-erucic rapeseed oil is preferably 30 mass% or more in the constituent fatty acid composition.

The chocolate for simultaneous baking of the present invention satisfies a condition (A) that a content of sucrose and/or glucose is 6 mass% or more and 20 mass% or less. By satisfying (A), it is possible to produce a chocolate having a good chocolate flavor and crunchy and hard texture despite being baked in contact with the water-containing dough.

When the content is more than 20 mass%, the texture of the chocolate becomes soft due to an influence of the water content contained in the bread dough or the baked confectionery dough. In the chocolate for simultaneous baking with the water-containing bread dough or baked confectionery dough, it is most important to satisfy the upper limit value of (A), i.e., 20 mass% or less. When the content is less than 6 mass%, sweetness of the chocolate intended in the present invention is insufficient, the chocolate flavor is deteriorated, and the chocolate of the present invention may not be produced.

As a preferred aspect, in (A), the content of sucrose is 5 mass% or more and 20 mass% or less, more preferably 5 mass% or more and 18 mass% or less, still more preferably 5 mass% or more and 17 mass% or less, and even more preferably 6 mass% or more and 16 mass% or less.

As another preferred aspect, in (A), the content of glucose is 4 mass% or more and 20 mass% or less, more preferably 4 mass% or more and 17 mass% or less, still more preferably 4 mass% or more and 15 mass% or less, and even more preferably 4 mass% or more and 13 mass% or less.

As the glucose used in the present invention, either an anhydrous crystal or a water-containing crystal can be used. However, in consideration of production suitability of chocolate, anhydrous crystals are particularly preferable.

The chocolate for simultaneous baking of the present invention satisfies a condition (B) that the chocolate contains one or more selected from the group consisting of isomaltulose, trehalose, and maltitol, preferably isomaltulose and/or trehalose, and most preferably isomaltulose. By satisfying (B), it is possible to produce a chocolate having a good chocolate flavor and crunchy and hard texture despite being baked in contact with the water-containing dough.

As a preferred aspect, the chocolate according to the present invention contains one or more selected from the group consisting of isomaltulose, trehalose, and maltitol in an amount of 5 mass% or more and 30 mass% or less, more preferably 7 mass% or more and 27 mass% or less, still more preferably 8 mass% or more and 27 mass% or less, still more preferably 8 mass% or more and 26 mass% or less, and most preferably 9 mass% or more and 25 mass% or less.

The chocolate for simultaneous baking of the present invention satisfies a condition (C) that a content mass ratio of sucrose to the contents of (B) is 1 or less, preferably less than 1, more preferably 0.9 or less, and still more preferably 0.8 or less. By satisfying (C), it is possible to produce a chocolate having a good chocolate flavor and crunchy and hard texture despite being baked in contact with the water-containing dough.

As a preferred aspect, the chocolate for simultaneous baking of the present invention contains the milk powder in an amount of 5 mass% or more and 30 mass% or less, more preferably 7 mass% or more and 27 mass% or less, still more preferably 8 mass% or more and 25 mass% or less, and even more preferably 8 mass% or more and 23 mass% or less.

As another preferred aspect, when the milk powder is contained in an amount of 15 mass% or more and 30 mass% or less, it is possible to produce a chocolate having a good chocolate flavor and crunchy and hard texture despite being baked in contact with the water-containing dough. In addition, it is possible to suppress a change in texture of the chocolate after simultaneous baking with the water-containing bread dough or baked confectionery dough.

The milk powder used in the present invention may be either skimmed milk powder or whole milk powder, and either thereof may be used alone or both thereof may be used in combination, and the whole milk powder is preferable.

As a preferred aspect, the chocolate for simultaneous baking of the present invention starch in an amount of 1 mass% or more and 10 mass% or less, more preferably 2 mass% or more and 10 mass% or less, still more preferably 3 mass% or more and 9 mass% or less, and even more preferably 3 mass% or more and 7 mass% or less.

In addition to the aspect of the present invention, by containing the starch, it is possible to suppress a change in texture of the chocolate after simultaneous baking with the water-containing bread dough or baked confectionery dough.

The starch that can be used in the present invention may be a natural starch such as corn starch, potato starch, wheat starch, or tapioca starch, a wheat flour or the like as a raw material thereof, or a processed starch exemplified by gelatinized starch, ether-crosslinked starch, or phosphate-crosslinked starch. In the present invention, any of these starches may be used, natural starch is more preferable than wheat flour, and the processed starch is still more preferable.

A method for producing the chocolate for simultaneous baking of the present invention can be carried out in the same manner as in producing a general chocolate. For example, the chocolate can be produced by appropriately selecting and mixing raw materials such as various powdered foods such as cocoa mass, cocoa butter, cocoa powder, oils and/or fats, saccharides, milk powder, and starch, emulsifiers, aroma agents, and pigments, and performing grain-refining with a roll refiner, a conching operation, and a mixing operation by a known method. In addition, the production method is not limited as long as the method includes refining and mixing processes, and for example, the chocolate can also be produced by a production method including refining and mixing processes using a ball mill.

In the present invention, it was found that an influence on the sweetness among the chocolate flavors was particularly large, and thus, in the present invention, the flavor of the chocolate was evaluated with particular emphasis on the sweetness. The chocolate having a sweetness within an acceptable range was defined as the chocolate for simultaneous baking of the present invention having a good flavor.

The crunchy and hard texture of the chocolate for simultaneous baking provided by the present invention is a crunchy texture as when a hard cookie or biscuit is eaten, and such a texture is a characteristic texture that is not provided in a known chocolate for baking. For example, even when the chocolate for simultaneous baking is eaten simultaneously with a bread, the chocolate of the present invention has a presence in the mouth, and clearly exhibits a crunchy texture.

### Examples

Hereinafter, the present invention will be described in more detail by presenting examples of the present invention. In the examples, both % and parts are meant to be on a mass basis.

### ∘ Preparation of non-tempered chocolate for simultaneous baking

The chocolates for simultaneous baking of Examples, Comparative Examples, and Reference Examples for sweetness were prepared by blending according to the descriptions in Tables 1 and 2 (blending unit was parts by mass).

The chocolate was prepared according to a known method.

That is, cocoa mass, cocoa powder, all powders, a suitable amount of melted oil and/or fat and lecithin were added, and these were mixed by a mixer while being heated to prepare a dough.

This dough was refined to a particle size of about 20 µm by a roll refiner. All remaining amounts of the oil and/or fat and lecithin were added to this, and the mixture was uniformly kneaded while the temperature was adjusted to about 60°C with a conching machine (conche) to produce a chocolate.

The prepared chocolate was melted in a water bath at 55°C, flowed into a sheet shape having a thickness of about 8 mm, solidified at from 0 to 5°C, and then cut into a size of 65 × 25 × 8 mm to produce a molded chocolate for simultaneous baking.
· For the whole milk powder, "Yotsuba whole milk powder" available from Yotsuba Milk Products Co., Ltd. was used.
· For isomaltulose, "Powdered palatinose PST-NP" available from Mitsui Sugar Co., Ltd. was used.
· For trehalose, trehalose available from Hayashibara Co., Ltd. was used.
· For maltitol, "RESIS" available from Mitsubishi Corporation Life Sciences Limited was used.
· For the starch, "Mirasic 468" available from Tate & Lyle Ingredients Americas LLC, which was a hydroxypropylated phosphate crosslinked starch (processed starch) derived from corn, was used.
· For the emulsifier, DK ester FA10E (available from DKS Co. Ltd.) which was an acetylated sucrose fatty acid ester was used.
· For the vegetable oil and/or fat, a mixture of 79 parts by mass of palm olein (iodine value: 67) and 21 parts by mass of random interesterified oil of palm olein (iodine value: 67) was used.

The oil and/or fat content (mass%) was calculated such that the oil and/or fat (cocoa butter) content in the cocoa powder used was 11 mass%, and the oil and/or fat (cocoa butter) content in the cocoa mass was 55%.

In the table, the following (a) to (c) are described.
(a) Total content of sucrose and glucose.
(b) Content of isomaltulose, trehalose, and maltitol.
(c) A content mass ratio of sucrose to a content of the (b).

**[Table 1]**

| | Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Cocoa mass | 8.5 | 7.9 | 7.9 | 7.9 | 8.8 | 7.9 | 8.8 | 7.9 | 7.8 | 7.9 | 7.9 | 7.9 |
| Cocoa powder | 10.0 | 10.0 | 10.0 | 10.0 | 10.0 | 10.0 | 10.0 | 10.0 | 10.0 | 10.0 | 10.0 | 10.0 |
| Whole milk powder | 18.5 | 15.1 | 15.1 | 15.1 | 20.2 | 10.1 | 20.2 | 15.1 | 20.2 | 15.1 | 15.1 | 15.1 |
| Sucrose | 6.0 | 9.0 | 10.0 | 10.0 | 9.0 | 11.1 | 5.0 | 10.0 | 8.9 | 10.0 | 10.0 | 10.0 |
| Glucose | - | - | - | 5.0 | 10.0 | 5.6 | 10.0 | - | 4.4 | 5.0 | 5.0 | 5.0 |
| Isomaltulose | 26.0 | 26.0 | 25.0 | 20.0 | 11.0 | 16.7 | 10.0 | 20.0 | 13.3 | 15.0 | - | - |
| Trehalose | - | - | - | - | - | - | - | - | - | - | 15.0 | - |
| Maltitol | - | - | - | - | - | - | - | - | - | - | - | 15.0 |
| Starch | - | - | - | - | - | 5.6 | 5.0 | 5.0 | 4.4 | 5.0 | 5.0 | 5.0 |
| Vegetable oil and/or fat | 31.0 | 32.0 | 32.0 | 32.0 | 31.0 | 33.0 | 31.0 | 32.0 | 31.0 | 32.0 | 32.0 | 32.0 |
| Lecithin | 0.1 | 0.1 | 0.1 | 0.1 | 0.1 | 0.1 | 0.1 | 0.1 | 0.1 | 0.1 | 0.1 | 0.1 |
| Aroma agent | 0.03 | 0.03 | 0.03 | 0.03 | 0.03 | 0.03 | 0.03 | 0.03 | 0.03 | 0.03 | 0.03 | 0.03 |
| Emulsifier | 0.5 | 0.5 | 0.5 | 0.5 | 0.5 | 0.5 | 0.5 | 0.5 | 0.5 | 0.5 | 0.5 | 0.5 |
| Oil and/or fat content: mass% | 41.6 | 41.4 | 41.4 | 41.4 | 42.2 | 41.1 | 42.2 | 41.4 | 41.7 | 41.4 | 41.4 | 41.4 |
| (a): mass% | 6.0 | 8.9 | 9.9 | 14.9 | 18.9 | 16.6 | 14.9 | 9.9 | 13.2 | 14.9 | 14.9 | 14.9 |
| (b): mass% | 25.8 | 25.8 | 24.8 | 19.9 | 10.9 | 16.6 | 9.9 | 19.9 | 13.2 | 14.9 | 14.9 | 14.9 |
| Sucrose: mass% | 6.0 | 8.9 | 9.9 | 9.9 | 8.9 | 11.1 | 5.0 | 9.9 | 8.8 | 9.9 | 9.9 | 9.9 |
| (c): sucrose/(b) | 0.2 | 0.3 | 0.4 | 0.5 | 0.8 | 0.7 | 0.5 | 0.5 | 0.7 | 0.7 | 0.7 | 0.7 |
| Whole milk powder: mass% | 18.5 | 15.1 | 15.1 | 15.1 | 20.2 | 10.1 | 20.2 | 15.1 | 20.2 | 15.1 | 15.1 | 15.1 |
| Starch: mass% | 0.0 | 0.0 | 0.0 | 0.0 | 0.0 | 5.5 | 5.0 | 5.0 | 4.4 | 5.0 | 5.0 | 5.0 |

**[Table 2]**

| | Comparative Example | | Reference Example for sweetness | |
|---|---|---|---|---|
| | 1 | 2 | 1 | 2 |
| Cocoa mass | 8.8 | 8.8 | 8.8 | 8.8 |
| Cocoa powder | 10.0 | 10.0 | 10.0 | 10.0 |
| Whole milk powder | 20.2 | 20.2 | 20.2 | 20.2 |
| Sucrose | 5.0 | 21.0 | 30.0 | - |
| Glucose | - | - | - | - |
| Isomaltulose | 25.0 | 9.0 | - | 30.0 |
| Starch | - | - | - | - |
| Vegetable oil and/or fat | 31.0 | 31.0 | 31.0 | 31.0 |
| Lecithin | 0.1 | 0.1 | 0.1 | 0.1 |
| Aroma agent | 0.03 | 0.03 | 0.03 | 0.03 |
| Emulsifier | 0.5 | 0.5 | 0.5 | 0.5 |
| Oil and/or fat content: mass% | 42.2 | 42.2 | 42.2 | 42.2 |
| (a): mass% | 5.0 | 20.9 | - | - |
| (b): mass% | 24.8 | 8.9 | - | - |
| Sucrose: mass% | 5.0 | 20.9 | - | - |
| (c): sucrose/(b) | 0.2 | 2.3 | - | - |
| Whole milk powder: mass% | 20.2 | 20.2 | - | - |
| Starch: mass% | 0.0 | 0.0 | - | - |

### [Method for simultaneously baking bread dough and chocolate]

A frozen croissant sheet was thawed, and the prepared chocolate for simultaneous baking in each of Examples, Comparative Examples, and Reference Examples for sweetness was wrapped with the thawed croissant sheet and fermented (30°C, humidity: 75%, 1 hour).

After the fermentation, the dough was baked in an oven (upper flame: 200°C/lower flame: 200°C) for 20 minutes.

After the baking, a croissant encapsulating the chocolate for simultaneous baking in each of Examples, Comparative Examples, and Reference Examples for sweetness was produced.

After cooling at room temperature for about 1 hour, the croissant encapsulating the chocolate was put in a bag, sealed, and stored at 20°C.

The sample stored at 20°C was opened after 1 day, 3 days, and 7 days, and was evaluated (for texture hardness).

Regarding a moisture value obtained by a sea sand method, in any of the chocolates for simultaneous baking, the moisture value before baking was 3% or less, and the moisture value after simultaneous baking was in a range of from 5% to 10% or less.

### o Sensory evaluation method

Evaluation was performed by five panelists, and scoring was performed according to the following criteria by consultation. The panelists in this evaluation were five skilled panelists who had been engaged in research on western confectioneries.

The sample after about 1 hour after the baking was evaluated as the sample of the day. The evaluation was performed on the chocolate in a portion covered with the croissant (unexposed portion).

### [Sweetness of chocolate]

As the chocolate flavor, evaluation was performed with emphasis on the sweetness in which a difference was particularly large. The sweetness of the chocolate was evaluated by eating (simultaneously with the croissant) the chocolate after being baked simultaneously with the croissant.

The evaluation was performed according to the following criteria on a scale of 5 points to 1 point, with the higher score indicating the better sweetness desired in the present invention. The results are listed in Table 3.

Reference Example 1 for sweetness was evaluated as 5 points (natural sweetness of sucrose), Reference Example 2 for sweetness was evaluated as 1 point (slight and weak sweetness) for sweetness evaluation, and the sweetness was relatively evaluated.

### [Texture hardness]

The evaluation was performed according to the following criteria, with the higher score indicating the higher hardness, which is desired in the present invention. The results are listed in Table 3.

| | |
|---|---|
| 5: | Strong crunchy feeling. Hard. |
| 4: | There is crunchy feeling. Hard. |
| 3: | Slightly hard. |
| 2: | Slightly soft. |
| 1: | Soft and tender. |

### [Change in texture hardness]

Differences calculated as described below based on the evaluation score in the [Texture hardness] are shown in Table 3.
(Evaluation score on the day) - (Evaluation score after 7 days)

**[Table 3]**

| | Examples | | | | | | | | | | | | Comparative Example | |
|---|---|---|---|---|---|---|---|---|---|---|---|---|---|---|
| | 1 | 2 | 3 | 4 | 5 | 6 | 7 | 8 | 9 | 10 | 11 | 12 | 1 | 2 |
| Sweetness of chocolate | 2.5 | 3 | 4 | 3.5 | 3 | 3.5 | 2.5 | 2.5 | 2.5 | 3 | 2.5 | 3 | 2 | 4 |
| Texture hardness on the day | 4.5 | 4.5 | 4.5 | 4 | 5 | 3.5 | 5 | 3 | 4 | 4 | 3.5 | 3.5 | 4.5 | 1 |
| Texture hardness after 1 day | 3.5 | 3.5 | 3.5 | 3 | 3 | 3.5 | 3.5 | 3 | 3.5 | 3.5 | 3 | 2.5 | 4 | 1 |
| Texture hardness after 3 days | 3 | 3 | 2.5 | 1 | 2 | 2 | 3 | 3 | 3.5 | 3 | 3 | 2 | 3.5 | 1 |
| Texture hardness after 7 days | 2 | 2 | 2 | 1 | 2 | 1.5 | 3 | 3 | 3 | 2 | 2 | 1.5 | 3.5 | 1 |
| Texture hardness change | 2.5 | 2.5 | 2.5 | 3 | 3 | 2 | 2 | 0 | 1 | 2 | 1.5 | 2 | 1 | 0 |

### ∘ Overall evaluation

The results of evaluation according to the following criteria are listed in Table 4.

[Sweetness of chocolate] The evaluation score of 2.5 points or more was evaluated as "∘ (= good)" in an allowable range, and the evaluation score of less than 2.5 points was evaluated as "× (= no good)".

[Texture hardness on the day] The evaluation score of 3 points or more was evaluated as "∘ (= good)" in an allowable range, and the evaluation score of less than 3 points was evaluated as "× (= no good)".

When evaluation of the sweetness of the chocolate and evaluation of the texture hardness on the day were both within the allowable range, the chocolate was determined to be acceptable as the chocolate for simultaneous baking of the present invention.

The change in texture of the chocolate was evaluated according to the following criteria. The results are listed in Table 4.

[Texture hardness after 7 days] The evaluation score was added as it was.

[Texture hardness change suppression score] +2 points were added within 2 points of change in texture.

+3 points were added within 1 point of change in texture.

The evaluation score of the texture hardness after 7 days and the texture hardness change suppression score were summed up to perform overall evaluation.

The evaluation results were considered in the following requirements (A) to (C).

In the table, a case where the following requirements are satisfied is described as "∘ (= good)", and a case where the following requirements are not satisfied is described as "× (= no good)".
(A) The content of sucrose and/or glucose is 6 mass% or more and 20 mass% or less.
(B) One or more selected from the group consisting of isomaltulose, trehalose, and maltitol are contained.
(C) The content mass ratio of sucrose to a content of the (B) is 1.0 or less.

In the table, the following requirements (D) and (E) are also described.

In the table, a case where the following requirements are satisfied is described as "∘ (= good)", and a case where the following requirements are not satisfied is described as "× (= no good)".
(D) 5 mass% or more and 30 mass% or less of milk powder is contained.
(E) from 1 to 10 mass% of starch is contained.

**[Table 4]**

| | Examples | | | | | | | | | | | | Comparative Example | |
|---|---|---|---|---|---|---|---|---|---|---|---|---|---|---|
| | 1 | 2 | 3 | 4 | 5 | 6 | 7 | 8 | 9 | 10 | 11 | 12 | 1 | 2 |
| Sweetness of chocolate | ○ | ○ | ○ | ○ | ○ | ○ | ○ | ○ | ○ | ○ | ○ | ○ | × | ○ |
| Texture hardness on the day | ○ | ○ | ○ | ○ | ○ | ○ | ○ | ○ | ○ | ○ | ○ | ○ | ○ | 0 |
| Judgment of acceptance | ○ | ○ | ○ | ○ | ○ | ○ | ○ | ○ | ○ | ○ | ○ | ○ | × | × |
| Texture hardness after 7 days | 2 | 2 | 2 | 1 | 2 | 1.5 | 3 | 3 | 3 | 2 | 2 | 1.5 | 3.5 | 1 |
| Texture hardness change suppression score | 0 | 0 | 0 | 0 | 0 | 2 | 2 | 3 | 3 | 2 | 2 | 2 | (3) | (0) |
| Overall evaluation | 2 | 2 | 2 | 1 | 2 | 3.5 | 5 | 6 | 6 | 4 | 4 | 3.5 | - | - |
| (a): mass% | 6.0 | 8.9 | 9.9 | 14.9 | 18.9 | 16.6 | 14.9 | 9.9 | 13.2 | 14.9 | 14.9 | 14.9 | 5.0 | 20.9 |
| (b): mass% | 25.8 | 25.8 | 24.8 | 19.9 | 10.9 | 16.6 | 9.9 | 19.9 | 13.2 | 14.9 | 14.9 | 14.9 | 24.8 | 8.9 |
| Sucrose: mass% | 6.0 | 8.9 | 9.9 | 9.9 | 8.9 | 11.1 | 5.0 | 9.9 | 8.8 | 9.9 | 9.9 | 9.9 | 5.0 | 20.9 |
| (c): sucrose/(b) | 0.2 | 0.3 | 0.4 | 0.5 | 0.8 | 0.7 | 0.5 | 0.5 | 0.7 | 0.7 | 0.7 | 0.7 | 0.2 | 2.3 |
| Whole milk powder: mass% | 18.5 | 15.1 | 15.1 | 15.1 | 20.2 | 10.1 | 20.2 | 15.1 | 20.2 | 15.1 | 15.1 | 15.1 | 20.2 | 20.2 |
| Starch: mass% | 0.0 | 0.0 | 0.0 | 0.0 | 0.0 | 5.5 | 5.0 | 5.0 | 4.4 | 5.0 | 5.0 | 5.0 | 0.0 | 0.0 |
| (A) | ○ | ○ | ○ | ○ | ○ | ○ | ○ | ○ | ○ | ○ | ○ | ○ | × | × |
| (B) | ○ | ○ | ○ | ○ | ○ | ○ | ○ | ○ | ○ | ○ | ○ | ○ | ○ | ○ |
| (C) | ○ | ○ | ○ | ○ | ○ | ○ | ○ | ○ | ○ | ○ | ○ | ○ | ○ | × |
| (D) | ○ | ○ | ○ | ○ | ○ | ○ | ○ | ○ | ○ | ○ | ○ | ○ | ○ | ○ |
| (E) | × | × | × | × | × | ○ | ○ | ○ | ○ | ○ | ○ | ○ | × | × |

### ∘ Consideration of Table 4

· As shown in Table 4, the chocolate for simultaneous baking of Examples had a good chocolate flavor (sweetness), and had a crunchy and hard texture even after simultaneous baking.
· In Examples 6 to 12, more preferable chocolates for simultaneous baking, which had good hardness after 7 days and also had little change in hardness after storage, were produced.
· In the chocolate of Comparative Example, the evaluation of the chocolate for simultaneous baking of the present invention was unacceptable in the simultaneous baking application.
· In Comparative Example 2, since (A) the content of sucrose and/or glucose was more than 20 mass%, the texture hardness immediately after baking was already soft and tender, and Comparative Example 2 could not be used as the chocolate for simultaneous baking.
· The chocolate for simultaneous baking of Examples satisfied all of the items (A) to (C).

### ∘ Preparation of tempered chocolate for simultaneous baking

A tempering type chocolate for simultaneous baking was prepared by blending according to the description in Table 5 (blending unit was parts by mass).

The chocolate was prepared according to a known method.

That is, cocoa mass, cocoa powder, all powders, a suitable amount of melted oil and/or fat and lecithin were added, and these were mixed by a mixer while being heated to prepare a dough.

This dough was refined to a particle size of about 20 µm by a roll refiner. All remaining amounts of the oil and/or fat and lecithin were added to this, and the mixture was uniformly kneaded while the temperature was adjusted to about 60°C with a conching machine (conche) to produce a chocolate.

The prepared chocolate was melted in a water bath at 55°C, subjected to tempering, flowed into a sheet shape having a thickness of about 8 mm, solidified at 5°C, and then cut into a size of 65 × 25 × 8 mm to produce a molded chocolate for simultaneous baking.
· As the vegetable oil and/or fat, product name "Melano NEW SS7") available from Fuji Oil Co., Ltd. was used.

As other additives, the additives described in the preparation of the non-tempered chocolate for simultaneous baking were used.

In the same manner as described in [Method for simultaneously baking bread dough and chocolate] above, a croissant encapsulating the chocolate for simultaneous baking was prepared, and the resulting chocolate was evaluated according to the same procedure, evaluation method, and evaluation criteria as described above. The evaluation results are listed in Table 6.

Based on the obtained results, overall evaluation was performed in the same manner as described above. The results are listed in Table 7.

**[Table 5]**

| | Example 13 |
|---|---|
| Cocoa mass | 7.8 |
| Cocoa powder | 10.0 |
| Whole milk powder | 20.2 |
| Sucrose | 8.9 |
| Glucose | 4.4 |
| Isomaltulose | 13.3 |
| Trehalose | - |
| Maltitol | - |
| Starch | 4.4 |
| Vegetable oil and/or fat | 31.0 |
| Lecithin | 0.1 |
| Aroma agent | 0.03 |
| Emulsifier | 0.5 |
| Oil and/or fat content: mass% | 41.7 |
| (a): mass% | 13.2 |
| (b): mass% | 13.2 |
| Sucrose: mass% | 8.8 |
| (c): sucrose/(b) | 0.7 |
| Whole milk powder: mass% | 20.2 |
| Starch: mass% | 4.4 |

**[Table 6]**

| | Example 13 |
|---|---|
| Sweetness of chocolate | 2.5 |
| Texture hardness on the day | 4 |
| Texture hardness after 1 day | 3.5 |
| Texture hardness after 3 days | 3.5 |
| Texture hardness after 7 days | 3 |
| Texture hardness change | 1 |

**[Table 7]**

| | Example 13 |
|---|---|
| Sweetness of chocolate | ○ |
| Texture hardness on the day | ○ |
| Judgment of acceptance | ○ |
| Texture hardness after 7 days | 3 |
| Texture hardness change suppression score | 3 |
| Overall evaluation | 6 |
| Carbohydrate: mass% | 38.9 |
| (a): mass% | 13.2 |
| (b): mass% | 13.2 |
| Sucrose: mass% | 8.8 |
| (c): sucrose/(b) | 0.7 |
| Whole milk powder: mass% | 20.2 |
| Starch: mass% | 4.4 |
| (A) | ○ |
| (B) | ○ |
| (C) | ○ |
| (D) | ○ |
| (E) | ○ |

### ∘ Consideration of Table 7

· As shown in Table 7, such a result was obtained that the tempered chocolate for simultaneous baking of Example 13 had a good chocolate flavor (sweetness) and had a crunchy and hard texture even after simultaneous baking.
· In Example 13, a more preferable chocolate for simultaneous baking, which had good hardness after 7 days and also had little change in hardness after storage, was produced.
· The chocolate for simultaneous baking of Example 13 satisfied all of the items (A) to (C).

### Industrial Applicability

According to the present invention, it is possible to provide a chocolate for simultaneous baking with a water-containing bread dough or baked confectionery dough, the chocolate having a good chocolate flavor and crunchy and hard texture despite being baked in contact with the water-containing dough such as a baked confectionery dough or a bread dough.

## Claims

1. A chocolate for simultaneous baking with a water-containing bread dough or baked confectionery dough, the chocolate satisfying all of the following (A) to (C):
(A) a content of sucrose and/or glucose is 6 mass% or more and 20 mass% or less;
(B) one or more selected from the group consisting of isomaltulose, trehalose, and maltitol are contained; and
(C) a content mass ratio of sucrose to a content of the (B) is 1 or less.

2. The chocolate for simultaneous baking with a water-containing bread dough or baked confectionery dough according to claim 1, the chocolate further containing 5 mass% or more and 30 mass% or less of a milk powder.

3. The chocolate for simultaneous baking with a water-containing bread dough or baked confectionery dough according to claim 1 or 2, the chocolate further containing 1 mass% or more and 10 mass% or less of starch.

4. The chocolate for simultaneous baking with a water-containing bread dough or baked confectionery dough according to claim 1 or 2, wherein the (B) is isomaltulose.

5. The chocolate for simultaneous baking with a water-containing bread dough or baked confectionery dough according to claim 3, wherein the (B) is isomaltulose.

6. A method for improving a texture of a chocolate after simultaneous baking, the method comprising using a chocolate satisfying all of the following (A) to (C) for simultaneous baking with a water-containing bread dough or baked confectionery dough:
(A) a content of sucrose and/or glucose is 6 mass% or more and 20 mass% or less;
(B) one or more selected from the group consisting of isomaltulose, trehalose, and maltitol are contained; and
(C) a content mass ratio of sucrose to a content of the (B) is 1 or less.

7. The method for improving a texture of a chocolate after simultaneous baking according to claim 6, wherein the chocolate further contains 5 mass% or more and 30 mass% or less of a milk powder.

8. The chocolate for simultaneous baking with a water-containing bread dough or baked confectionery dough according to claim 3, wherein a change in texture of the chocolate after simultaneous baking with the water-containing bread dough or baked confectionery dough is suppressed.
